(19) **Europäisches Patentamt**

**European Patent Office**

**Office européen des brevets**

(11) **EP 1 439 096 B1**

(12) **EUROPEAN PATENT SPECIFICATION**

(45) Date of publication and mention
of the grant of the patent:
**18.10.2006 Bulletin 2006/42**

(51) Int Cl.:
***B60R 21/16*** *(2006.01)*

(21) Application number: **03000646.4**

(22) Date of filing: **16.01.2003**

(54) **Occupant protection arrangement for a motor vehicle**

Schutzsystem für Kraftfahrzeuginsassen

Dispositif de protection des occupants d'un véhicule

(84) Designated Contracting States:
**DE GB SE**

(43) Date of publication of application:
**21.07.2004 Bulletin 2004/30**

(73) Proprietor: **Ford Global Technologies, LLC
Dearborn, MI 48126 (US)**

(72) Inventors:
• **Hardå, Peter
413 24 Göteborg (SE)**

• **Levenstam, Mårten
426 74 Västra Frölunda (SE)**

(74) Representative: **Spitmann, Knut Hermann
Volvo Car Corporation
Department 91030 PVD 4:1
405 31 Göteborg (SE)**

(56) References cited:
**US-A- 3 731 949       US-A- 4 300 894
US-A1- 2001 033 072    US-A1- 2002 171 232**

## Description

The present invention relates to an occupant protection arrangement for a motor vehicle comprising at least one inflatable airbag having a front surface, said front surface facing towards an occupant when said airbag is inflated and deployed in the case of an emergency.

## Technical background

Occupant protection arrangements for motor vehicles having an inflatable airbag are well known and commonly used as a standard equipment for modern vehicles. The purpose of an occupant protection arrangement is to reduce and possibly eliminate injury to the occupant of the vehicle in a crash. It has to be mentioned at this point that the addition of airbags to an occupant protection arrangement has significantly enhanced the overall protection extended to the occupant of a vehicle.

However, under certain circumstances the vehicle occupant may be injured by the airbag. In particular, shorter vehicle occupants are more susceptible to being injured as opposed to taller vehicle occupants because of the deployment direction of the airbag. The airbag is designed so as to deploy at a direction towards the chest/sternum area of a 50th percentile adult male (1.75 meters, 77 kg), where forces can be absorbed most readily due to natural stiffness and support in the human body. Shorter vehicle occupants are more susceptible to injury because the airbag is deployed in the direction of their head and chin as opposed to their chest/sternum area possibly causing hyperextension of the cervical region of the spine.

However, the 50th percentile adult male does not represent the 50th percentile across genders. That means that most of the adult population will actually be smaller than the standard used for adjusting the airbag. Thus, a deployed airbag will have an initial point of contact that is higher than the chest/sternum area. With other words, since the airbag is designed to give an adequate loading to the chest, the loading on the head is unnecessarily high, which may cause neck bending and high neck loads.

To overcome the imbalance in the loading characteristics between chest loading and head loading it is known, for example from the generic US 2001/0033072, to create a recess in the centre of the front surface of the airbag, facing towards an occupant when the airbag is inflated and deployed in the case of an emergency. The recess is formed in the shape of a valley to form the airbag into a heart-like shape. This design is intended to increase the forward movement of the occupant until the occupant makes contact with the airbag, whereby the occupant comes into contact with the airbag after an amount kinetic energy of the occupant is absorbed by a seat belt.

This known solution may work for the 50th percentile adult male for which this airbag is designed, but shorter and taller occupants who are the majority will still have an initial point of contact with the airbag that is higher or lower than the recess causing hyperextension of the cervical region of the spine. Furthermore, a part of the distance available to absorb crash energy is wasted. That creates a need for a stiffer airbag than if all the distance could be used.

Also known is an occupant protection device having an airbag with a multi-chambered design, described in US 6,158,765. This known airbag has one inflatable thorax protection chamber and one head protection chamber. The thorax protection chamber is inflated first for thorax protection of the occupant. The head protection chamber is inflated indirectly via the thorax protection chamber for head protection of the occupant. By this stepwise inflating of the different chambers a hyperextension of the cervical region of the spine could be avoided. However, even this solution is designed for the 50th percentile adult male and will therefore not work perfectly for the majority of the adult population. Beside that, a part of the distance available to absorb crash energy is wasted thereby creating a need for a stiffer airbag then if all the distance could be used.

Another known solution to minimise head- and neck injury to a vehicle occupant is known from WO 01/44026. A vehicle occupant restraint system adjusts the deployment direction of an airbag in accordance with vehicle occupants' seated height and / or projected trajectory. The seated height of a vehicle occupant can be measured directly by infrared, electromagnetic or acoustic sensors, or indirectly by measuring vehicle occupant weight. By adjusting the deployment orientation of the airbag the initial point of contact will be the chest /sternum area of the occupant irrespective of the occupants' size. However, this known solution requires additional investment in sensing means and in technical equipment for adjusting the deployment direction of the airbag. As a result, this solution is more expensive and requires more technical effort due to the large number of parts interfering with each other. Further, sensing height and/or projected trajectory cannot be done perfectly, leaving some possibility of error.

## Summary of the invention

It is the object of the present invention to provide an occupant protection arrangement for a motor vehicle comprising at least one inflatable airbag having a front surface, said front surface facing towards an occupant when that airbag is inflated and deployed in the case of an emergency, which minimises head- and neck injury to the occupant irrespective of the occupant's size.

This object is achieved by the features of claim 1.

This achieves the effect that the membrane forces in the airbag fabric, which the inventors surprisingly have discovered are mainly responsible for the imbalance in the loading characteristics between chest-

loading and head-loading, are significantly reduced or even eliminated, irrespective of the occupant's size.

The pressure in a conventional airbag, as mentioned above, is tuned to give an adequate loading to the chest, and the size of a conventional airbag is designed to cooperate with the chest.

Therefore, the force from the airbag acting on the chest ($F_{Chest}$) is approximately equal to the pressure in the airbag (p) multiplied by the area of the airbag that is in contact with the chest (A):

$$F_{Chest} \approx p \times A$$

The force from the airbag acting on the head ($F_{Head}$) is, however, much higher than the pressure in the airbag (p) multiplied by the area of the airbag that is in contact with the head ($A_{Head}$) :

$$F_{head} \gg p \times A_{Head}$$

The direct pressure from the airbag accounts for only a small part of the airbag loading on the head. The major part of the force acting on the head is the membrane force ($F_{Membrane}$) in the airbag fabric:

$$F_{Head} \approx p \times A_{head} + F_{Membrane}$$

The membrane force ($F_{membrane}$) affecting the head is created by the pressure of the airbag acting on the fabric around the head ($A_{side}$):

$$F_{Membrane} = p \times A_{side}$$

The membrane force ($F_{Membrane}$) occurs as the airbag extends above and to the sides of the head. More excess fabric around the head will create more membrane force ($F_{Membrane}$) and hence increase the loading on the head. From this it is quite clear that small occupants have a higher imbalance between chest loading and head loading since they will have more excess fabric around the head.

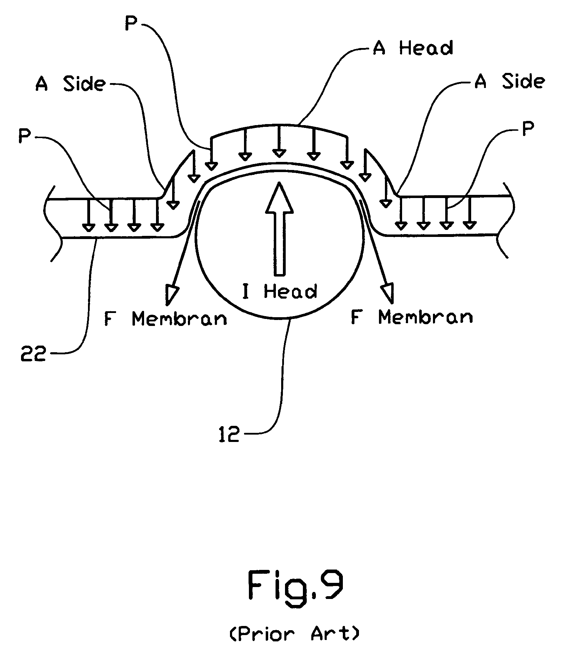

This is shown in **Fig.9** which is a diagrammatic representation of the head loading of a front surface (22) of a conventional airbag. The force ($F_{head}$) acting on the head (12) is the direct pressure from the airbag (P x $A_{head}$) plus the membrane forces ($F_{Membrane}$) created by the excess fabric areas of the airbag extending above and to the sides of the head (12). That means, however, that there is a high imbalance between the chest-loading and head-loading leading to a much higher force ($F_{head}$) acting on the head (12).

By incorporating projections limited by small elongated indentations into the front surface of an airbag to restrict the membrane forces in the front surface of the airbag, the possibility for the membrane force created in the excess fabric areas of the front surface to act on the head is reduced or even removed.

The fabric of an airbag can carry only tensile loads. These tensile loads will be carried by the projections limited by the indentations, but not transferred from one side of the indentation to the other side of it. Therefore, if a head impacts a projection limited by indentations, membrane forces from the excess fabric areas not loaded by the head of the occupant will be taken by the indentations. Hence, if a head impacts the complete projection limited by the indentations the force ($F_{Head}$) acting on the head will be only the airbag pressure (P) times the area contacted by the head ($A_{Head}$):

$$F_{Head} = p \times A_{Head}$$

If the head hits only a part of the projection limited by the indentations, the additional membrane force will only be the membrane force created by the excess fabric area of the projection limited by the indentations since the indentations restrict the membrane forces to the projection locally limited by the indentations. With other words, the membrane forces are restricted to locally limited areas. As a result, the membrane forces are significantly reduced or even eliminated.

The areas limited by the elongated indentations could be seen as local projections relative to the indentations. The membrane forces from the areas surrounding the small elongated indentations will be carried by the indentations until the local projections are completely reversed. When the local projection is completely reversed due to the impact of the head of the occupant the indentations will be erased and, hence, will not longer carry the membrane forces from the surrounding areas of the front surface of the airbag. At that point the airbag will behave as a traditional airbag meaning that the imbalance between head loading and chest loading is restored. However, this will only happen in accidents involving very high violence, and it will then have a positive effect in such accidents. The increased force towards the head at the end will reduce the risk of head impact due to the airbag bottoming out. Head impacts are more dangerous than neck injuries so that the added force at the end will, although increasing the risk for the neck, reduce the total risk of injury.

The projections limited by small elongated indentations that are located only in a target area for the occupant's head and that are restricting the membrane forces in the front surface of the airbag will not make the chest-loading characteristics of the airbag worse. As mentioned previously, the airbag is mainly designed for chest-loading which means that the major part of the force of the chest originates from the airbag pressure on the contact area between chest and airbag. Therefore, the projections limited by elongated indentations will not have any effect on the restraint of the chest, but improve head- and neck protection essentially irrespective of the occupant's size.

By the projections limited by small, elongated indentations it is possible to maintain an essential plane front surface which, when the airbag is inflated and deployed, will be adjacent to the occupant. The occupant will therefore be caught by the complete surface directly, and not only by a portion of it, so that the whole distance available to absorb crash energy is used. As a result, the airbag can be "softer" with a somewhat reduced pressure making it more "friendly" to the occupant, reducing the risk for injuries further.

The elongated indentations limiting the projections restricting the membrane forces in the front surface of the airbag could be arranged in a number of different ways, depending for example on the airbag pressure, the airbag size, location of the airbag in the vehicle, deployment direction of the airbag etc. For example, the elongated indentations can be arranged horizontally or vertically, or they can be arranged in a combination of horizontal and vertical indentations creating a mesh on the front surface of the airbag. Furthermore, the amount of the elongated indentations in the front surface of the airbag as well as the size and depth of the indentations can be varied to fit different designs. The optimal design of the elongated indentations will vary with different airbag and vehicle properties and will be evident for a person skilled in the art.

Regarding the depth of the indentations it is evident that a certain depth is required to reduce or eliminate the membrane forces in the airbag fabric. However, the indentations must not be too deep to allow that the indentations are erased in case of an accident involving very high violence, where the local projection between the indentations is completely reversed, as explained above.

The small elongated indentations limiting the projections in the front surface of the airbag restricting the membrane forces in the front surface can be achieved in different ways. For example, straps can be added that hold back the airbag front at the desired indentation areas or points. The airbag could also be sewn from fabric panels that create the desired shape. It is further possible to change the airbag shape by attaching ribbons that make the seams shorter thus crumpling the airbag fabric at the seam, thereby altering the airbag shape so that indentations are created by the seams. It is also possible to create an airbag where each indentation, or more precisely each local projection between indentations, is created from a separate chamber, thus creating a multi-chambered airbag.

## Brief description of the drawings

The invention is explained in more detail with reference to the drawings, in which:

> **Fig.1** shows a diagrammatic side view of an occupant facing a deployed airbag not according to the present invention,
>
> **Fig.2** shows the front surface of the deployed airbag of **Fig.1,**
>
> **Fig.3** shows the front surface of a deployed airbag also not according to the present invention,
>
> **Fig.4** shows the front surface of a deployed airbag also not according to the present invention,
>
> **Fig.5** shows the front surface of a deployed airbag according to an embodiment of the present invention,
>
> **Fig.6** shows the common front surface of deployed airbags not according to the present invention,
>
> **Fig.7** shows a diagrammatic representation of the head loading,
>
> **Fig.8** shows a diagrammatic representation of a different head loading situation, and
>
> **Fig.9** shows a diagrammatic representation of the head loading with an airbag according to the prior art, which have been discovered by the inventors.

## Description of the preferred embodiments

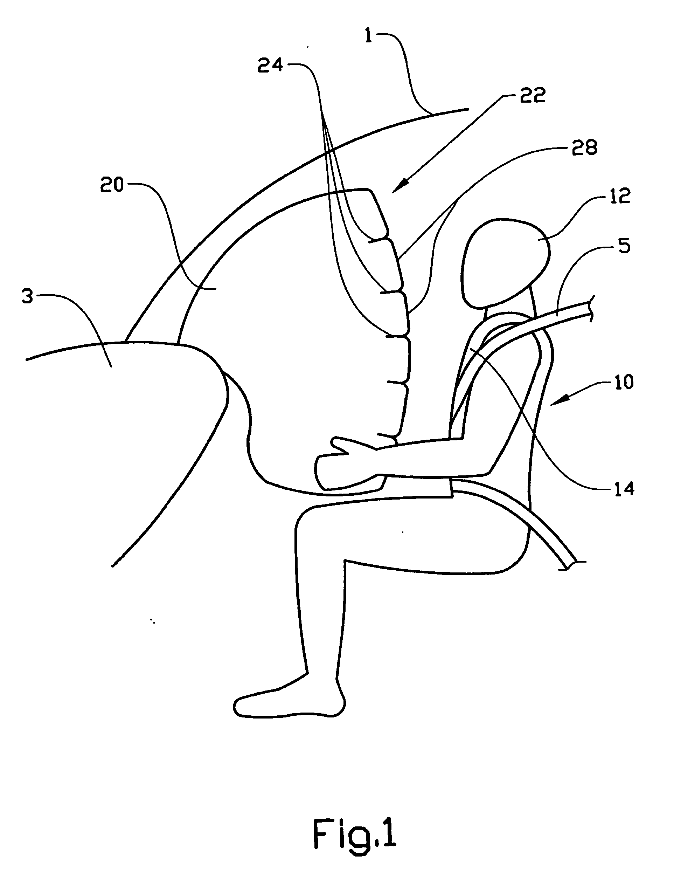

**Fig.1** shows a schematic side view of an occupant (10) in a motor vehicle facing a deployed and inflated airbag (20) of an occupant protection arrangement not according to the invention. The airbag (20) in its normal deflated and folded condition as well as the part of the occupant protection arrangement comprising the deployment means are in a well known and therefore not shown manner arranged inside an instrument panel (3) under a windshield (1). Alternatively, the deflated and folded airbag (20) could be stowed within the vehicle's steering wheel assembly (not shown). The occupant (10) is belted with a conventional seatbelt (5).

It should be noted that even if the invention is explained in combination with a belted occupant (10) the invention will work with unbelted occupants as well. Unbelted occupants will experience most benefits of the design since the imbalance between chest-loading and head-loading is significantly reduced or even eliminated.

The inflated and deployed airbag (20) has a front surface (22) facing towards the occupant (10). The front surface (22) comprises several elongated indentations (24) as well as local projections (28) created by and arranged between the small elongated indentations (24). As it is evident from **Fig.1**, the front surface (22) is an essential plane surface adjacent to the occupant (10) with the local projections (28) laying in the same plane surface.

The schematic side view in **Fig.1** represents the stage shortly after an accident has occurred where the airbag (20) already is deployed but where the occupant (10) is held only by the seatbelt (5) and has not yet contacted the front surface (22) of the airbag (20). Due to the front surface (22) being an essential plane surface adjacent to the occupant (10) the occupant (10) will be caught by the complete front surface (22) directly. Thereby the whole distance available to absorb crash energy is used.

The occupant (10) will contact the front surface (22) with the head (12) and the chest (14). However, since the airbag (20) is designed not for chest loading but for chest and head loading ("occupant loading"), head- and neck injury is minimised. The small elongated indentations (24) restrict the membrane forces in the front surface (22), thereby reducing or even eliminating the imbalance in the loading characteristics between chest-loading and head-loading significantly.

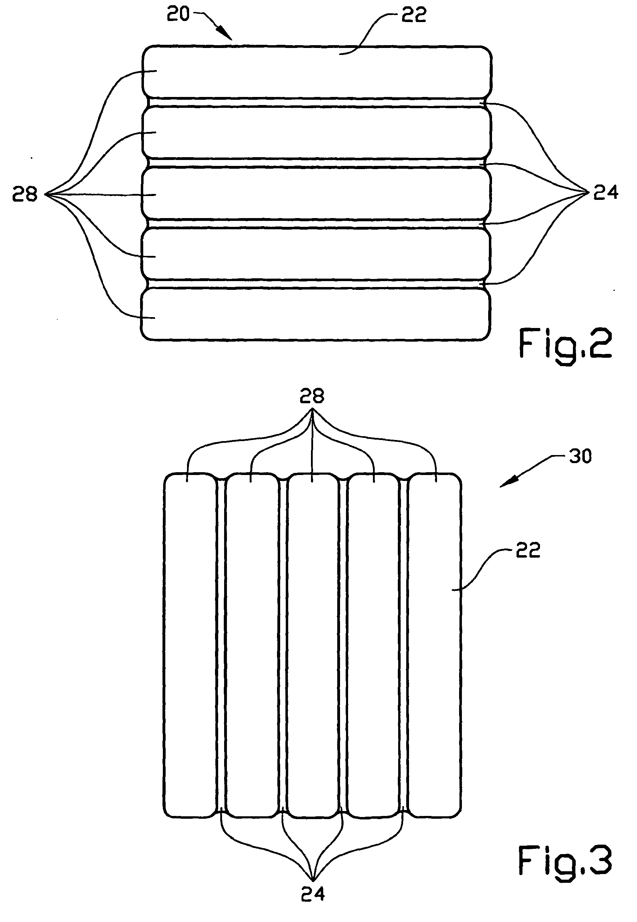

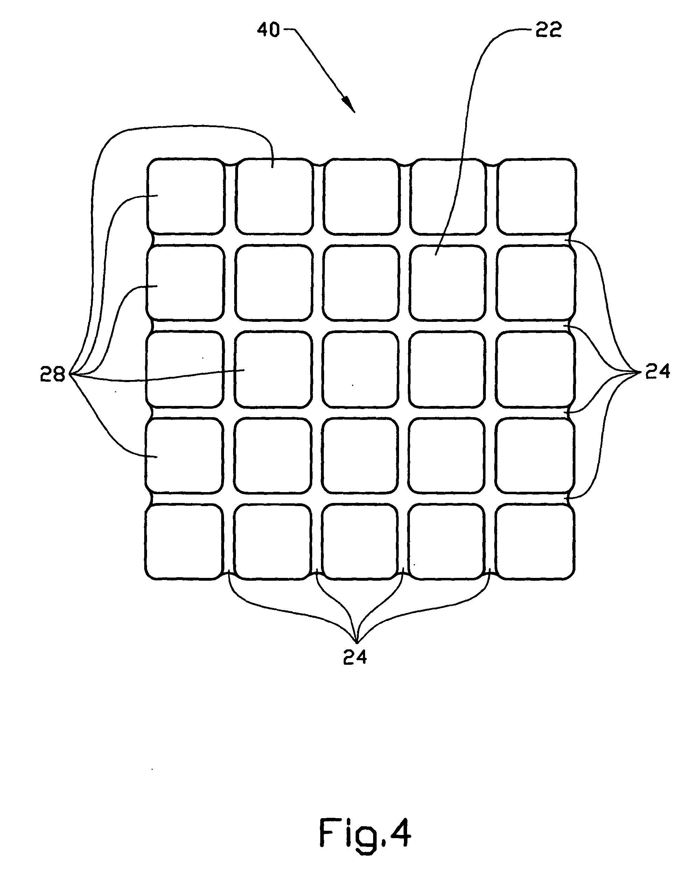

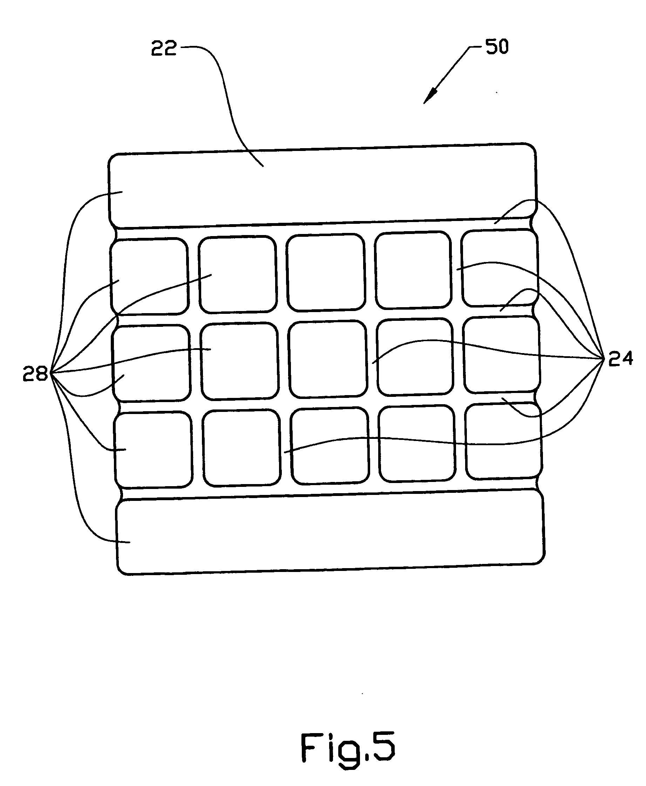

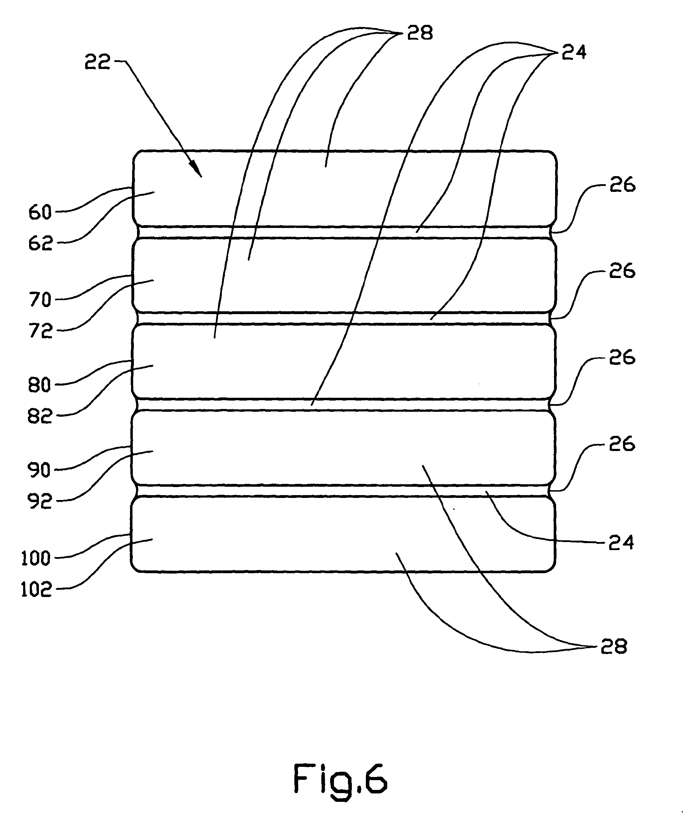

The front surface (22) of the airbag (20) is shown in **Fig.2.** The small elongated indentations (24) are arranged horizontally in the front surface (22), thereby creating local projections (28) in-between them. The small elongated indentations (24) can be arranged in other ways also, for example vertically as shown in **Fig.3**, or horizontally and vertically as shown in **Fig. 4.**

**Fig.3** shows the front surface (22) of an airbag (30) not according to the invention. As mentioned, the small elongated indentations (24) are arranged vertically in this embodiment creating local projections (28) in-between them.

**Fig.4** shows the front surface (22) of an airbag (40) not according to the invention. As mentioned, the small elongated indentations (24) are arranged horizontally and vertically in this embodiment creating a mesh structure on the front surface (22) with the local projections (28) in-between the elongated indentations (24).

**Fig.5** shows the front surface (22) of an airbag (50) according to an embodiment of the invention. As mentioned, the small elongated indentations (24) are arranged horizontally and vertically only in the target area for a head of the occupant (10). Thereby a mesh structure is created only in the target area for the head in the front surface (22) with local projections (28) in-between the elongated indentations (24).

**Fig.6** show not according to the invention several airbags (60, 70, 80, 90, 100) that are arranged in such a way that their front surfaces (62, 72, 82, 92, 102) create a common front surface (22) and cooperate to form elongated indentations (24) between said airbags (60, 70, 80, 90, 100). The airbags are attached to each other by means of seams (26), whereby the seams (26) create the small elongated indentations (24). Also here the common front surface (22) is an essential plane surface comprising local projections (28) restricted by the elongated indentations (24).

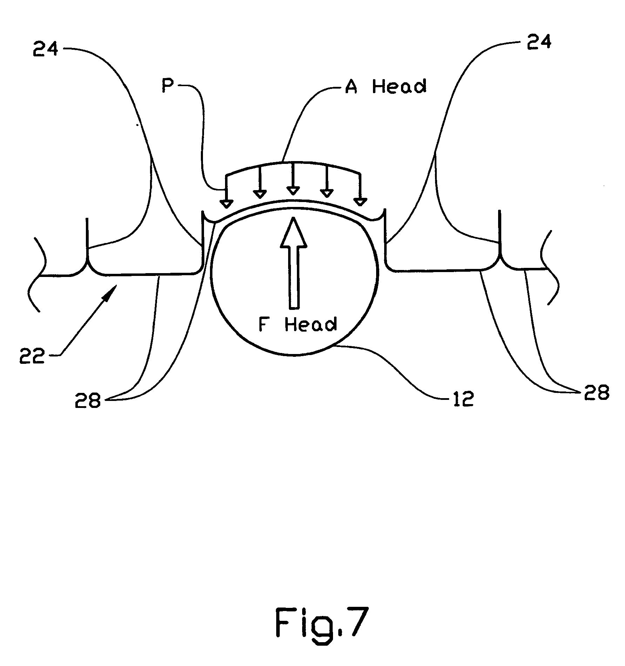

**Fig.7** shows a diagrammatic representation of the head loading of the front surface (22) of the above described airbags (20, 30, 40, 50; 60, 70, 80, 90, 100). It represents the stage where the head (12) has contacted a local projection (28) in-between indentations (24) arranged in the front surface (22). As it is evident from **Fig. 7**, when the head (12) impacts the local projection (28), which is an area limited by the small elongated indentations (24), the local projection (28) will be compressed and the resulting force ($F_{head}$) on the head (12) will be the airbag pressure (P) times the area contacted by the head ($A_{head}$). The areas of the front surface (22) not loaded by the head (12) will not participate or add to the resulting force ($F_{head}$) on the head (12). No excess areas of the front surface (22) and hence no additional membrane forces will act on the head (12).

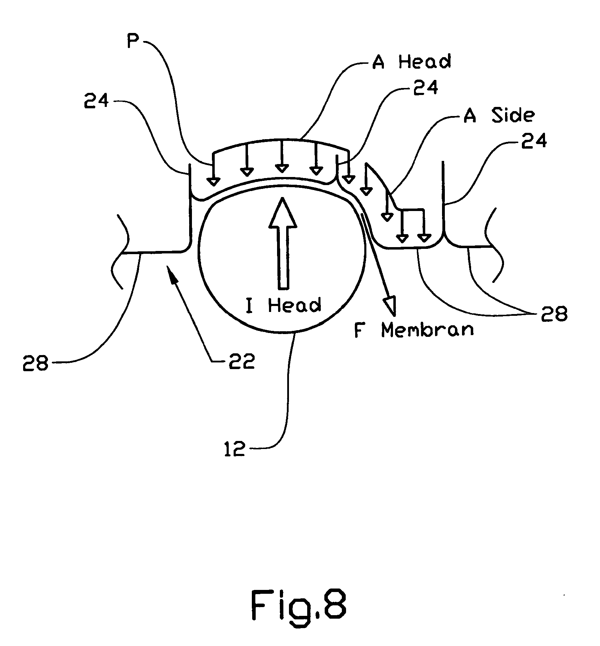

If the head (12) hits only a part of a local projection (28) limited by the elongated indentations (24), as shown in **Fig.8** which is a diagrammatic representation, the additional membrane force ($F_{Membrane}$) will only be the limited membrane force created by the excess fabric area ($A_{side}$) of the local projection (28), since the small elongated indentations (24) restrict the membrane force to the area locally limited by the indentations (24). With other words, the membrane forces are restricted to locally limited areas. As a result, the membrane forces are significantly reduced and the force ($F_{head}$) acting on the head (12) is the pressure (P) in the airbag times the area ($A_{head}$) contacted by the head (12) plus the limited membrane force ($F_{Membrane}$).

With a conventional airbag having a front surface (22) without elongated indentations for restricting the membrane forces, as for example shown in **Fig.9** which is a diagrammatic representation as well, the force ($F_{head}$) acting on the head (12) is the direct pressure from the airbag (P x $A_{head}$) plus the membrane forces ($F_{Membrane}$) created by the excess fabric areas of the airbag extending above and to the sides of the head (12). That means, however, that there is a high imbalance between the chest-loading and head-loading leading to a much higher force ($F_{head}$) acting on the head (12).

**Reference Numbers**

| | |
|---|---|
| 1 | windshield |
| 3 | instrument panel |
| 5 | seatbelt |
| 10 | occupant |
| 12 | head |
| 14 | chest |
| 20 | airbag |
| 22 | front surface |

| | |
|---|---|
| 24 | indentation |
| 26 | seam |
| 28 | local projection |
| 30 | airbag |
| 40 | airbag |
| 50 | airbag |
| 60 | airbag |
| 62 | front surface |
| 70 | airbag |
| 72 | front surface |
| 80 | airbag |
| 82 | front surface |
| 90 | airbag |
| 92 | front surface |
| 100 | airbag |
| 102 | front surface |

## Claims

1. An occupant protection arrangement for a motor vehicle comprising
at least one inflatable airbag (20) having a front surface (22), said front surface (22) facing toward and being adjacent to an occupant (10) when said airbag (20) is inflated and deployed in the case of an emergency, **characterised in that** said front surface (22) when said airbag is inflated forms an essentially plane surface and comprises an impact area consisting of local projections (28) limited by elongated indentations (24) only in a target area for a head of the occupant (10), wherein said indentations (24)are arranged to restrict the membrane forces in the front surface (22) and thereby reducing the imbalance in the loading characteristics between chest-loading and head-loading and wherein said local projections (28) is lying in said essentially plane surface.

2. An occupant protection arrangement for a motor vehicle according to claim 1, **characterised in that** said elongated indentations (24) are arranged horizontally and vertically in said area of the front surface (22).

3. An occupant protection arrangement for a motor vehicle according to claim 1 or 2, **characterised in that** said elongated indentations (24) are formed by seams (26) in the airbag fabric.

4. An occupant protection arrangement for a motor vehicle according to claim 1 or 2, **characterised in that** said elongated indentations (24) are formed by straps inside the airbag.

## Patentansprüche

1. Insassenschutzanordnung für ein Kraftfahrzeug, das Folgendes umfasst:

mindestens einen aufblasbaren Airbag (20) mit einer Vorderfläche (22), die zu einem Insassen (10) weist und sich neben ihm befindet, wenn der Airbag (20) in einem Notfall aufgeblasen und entfaltet ist,
**dadurch gekennzeichnet, dass**
die Vorderfläche (22) bei aufgeblasenem Airbag eine im Wesentlichen ebene Fläche bildet und einen Aufprallbereich umfasst, der aus lokalen Vorsprüngen (28) besteht, die durch längliche Einkerbungen (24) nur in einem Zielbereich für einen Kopf des Insassen (10) begrenzt werden, wobei die Einkerbungen (24) dazu angeordnet sind, die Membrankräfte in der Vorderfläche (22) zu begrenzen und **dadurch** das Ungleichgewicht der Belastungseigenschaften zwischen Brustkorb-Belastung und Kopf-Belastung zu reduzieren, und wobei die lokalen Vorsprünge (28) in der im Wesentlichen ebenen Fläche liegen.

2. Insassenschutzanordnung für ein Kraftfahrzeug nach Anspruch 1, **dadurch gekennzeichnet, dass** die länglichen Einkerbungen (24) im Bereich der Vorderfläche (22) horizontal und vertikal angeordnet sind.

3. Insassenschutzanordnung für ein Kraftfahrzeug nach Anspruch 1 oder 2, **dadurch gekennzeichnet, dass** die länglichen Einkerbungen (24) durch Nähte (26) im Airbag-Gewebe gebildet werden.

4. Insassenschutzanordnung für ein Kraftfahrzeug nach Anspruch 1 oder 2, **dadurch gekennzeichnet, dass** die länglichen Einkerbungen (24) durch Gurte im Airbag gebildet werden.

## Revendications

1. Dispositif de protection des occupants d'un véhicule automobile comprenant
au moins un airbag gonflable (20) ayant une surface avant (22), ladite surface avant (22) faisant face et étant adjacente à un occupant (10) lorsque ledit airbag (20) est gonflé et déployé en cas d'urgence, **caractérisé en ce que**
ladite surface avant (22), lorsque ledit airbag est gonflé, forme une surface essentiellement plane et comprend une zone d'impact constituée de saillies locales (28) limitées par des indentations allongées (24) uniquement dans une zone cible pour la tête d'un occupant (10), lesdites indentations (24) étant prévues pour limiter les forces membranaires dans la surface avant (22) et pour ainsi réduire le déséquilibre dans les caractéristiques de charges entre la charge appliquée au thorax et la charge appliquée à la tête et lesdites saillies locales (28) étant disposées dans ladite surface essentiellement plane.

2. Dispositif de protection des occupants d'un véhicule automobile selon la revendication 1, **caractérisé en ce que** lesdites indentations allongées (24) sont prévues horizontalement et verticalement dans ladite zone de la surface avant (22).

3. Dispositif de protection des occupants d'un véhicule automobile selon la revendication 1 ou 2, **caractérisé en ce que** lesdites indentations allongées (24) sont formées par des coutures (26) dans le tissu de l'airbag.

4. Dispositif de protection des occupants d'un véhicule automobile selon la revendication 1 ou 2, **caractérisé en ce que** lesdites indentations allongées (24) sont formées par des bandes à l'intérieur de l'airbag.

Fig.1

20  22

28  24

## Fig.2

28

30

22

24

## Fig.3

Fig.4

Fig.5

Fig.6

Fig.7

Fig.8

# Fig.9

(Prior Art)